(19) Europäisches Patentamt
European Patent Office
Office européen des brevets

(11) **EP 2 434 741 A1**

(12) **EUROPEAN PATENT APPLICATION**

(43) Date of publication:
28.03.2012 Bulletin 2012/13

(51) Int Cl.:
*H04N 1/00* (2006.01)   *H04N 1/387* (2006.01)

(21) Application number: 11172976.0

(22) Date of filing: 07.07.2011

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 24.08.2010 KR 20100082088

(71) Applicant: Samsung Electronics Co., Ltd.
Gyeonggi-do 442-742 (KR)

(72) Inventor: Kim, Haeng-nan
Suwon-si Gyeonggi-do (KR)

(74) Representative: Misselbrook, Paul
Appleyard Lees
15 Clare Road
Yorkshire
Halifax HX1 2HY (GB)

(54) **Image scanning system and method**

(57) An image scanning method includes obtaining image data of a document on a flatbed, detecting position information of the document based on a reference point of the flatbed from the obtained image data, and generating an image file in which a position of the obtained image data is corrected based on the reference point of the flatbed by using the detected position information.

FIG. 1

**Description**

CROSS-REFERENCE TO RELATED APPLICATIONS

This application claims the benefit of Korean Patent Application No. 10-2010-0082088, filed on August 24, 2010, in the Korean Intellectual Property Office, the disclosure of which is incorporated herein in its entirety by reference.

BACKGROUND

1. Field

The present general inventive concept relates to image scanning systems and methods.

2. Description of the Related Art

An image scanning apparatus generally irradiates light onto a flatbed on which a document is positioned, by using a light source, and photoelectrically transforms reflected light by using an image sensor, thereby generating image data. When the document is not positioned on a predetermined position on the flatbed, a scanned image of the document may be biased or tilted.

SUMMARY

According to the present invention there is provided an image scanning system, image forming apparatus including said image scanning system and image scanning method as set forth in the appended claims. Other features of the invention will be apparent from the dependent claims, and the description which follows.

The present general inventive concept provides image scanning systems and methods for correcting a position of image data. The present general inventive concept also provides non-transitory computer readable recording media having recorded thereon a program for executing the image scanning methods. The present generating inventive concept is not limited thereto, and may have various technical goals.

According to an aspect of the present general inventive concept, there is provided an image scanning system including an image scanning apparatus for obtaining image data of a document on a flatbed, detecting position information of the document based on a reference point of the flatbed from the obtained image data, and outputting the obtained image data and the detected position information; and a receiving apparatus for receiving the image data and the position information, generating a command for correcting a position of the received image data based on the reference point of the flatbed by using the position information, and executing the generated command so as to generate an image file in which the position of the obtained image data is corrected based on the reference point of the flatbed.

According to another aspect of the present general inventive concept, there is provided an image scanning method including obtaining image data of a document on a flatbed; detecting position information of the document based on a reference point of the flatbed from the obtained image data; generating a command for correcting a position of the obtained image data based on the reference point of the flatbed by using the detected position information; and executing the generated command so as to generate an image file in which the position of the obtained image data is corrected based on the reference point of the flatbed.

According to another aspect of the present general inventive concept, there is provided a non-transitory computer readable recording medium having recorded thereon a program for executing the image scanning method.

BRIEF DESCRIPTION OF THE DRAWINGS

The above and other features and advantages of the present general inventive concept will become more apparent by describing in detail exemplary embodiments thereof with reference to the attached drawings in which:

FIG. 1 is a block diagram of an image scanning system according to an embodiment of the present general inventive concept;

FIG. 2 is a diagram of an image formed by scanning a document on a flatbed of an image scanning apparatus, according to an embodiment of the present inventive concept;

FIG. 3 is a diagram of image data of a document as a scan target, and a command generated by a command generating unit, according to an embodiment of the present inventive concept;

FIG. 4 is a diagram of file data that is formed by combining a command generated by a command generating unit with image data, according to an embodiment of the present inventive concept;

FIG. 5 is a diagram of an image file that is generated according to an execution result of the file data of FIG. 4, according to an embodiment of the present inventive concept;

FIG. 6 is a diagram of an image forming apparatus according to an embodiment of the present general inventive concept; and

FIG. 7 is a flowchart of an image scanning method according to an embodiment of the general inventive concept.

DETAILED DESCRIPTION

The present general inventive concept will now be described more fully with reference to the accompanying drawings, in which exemplary embodiments of the present general inventive concept are shown.

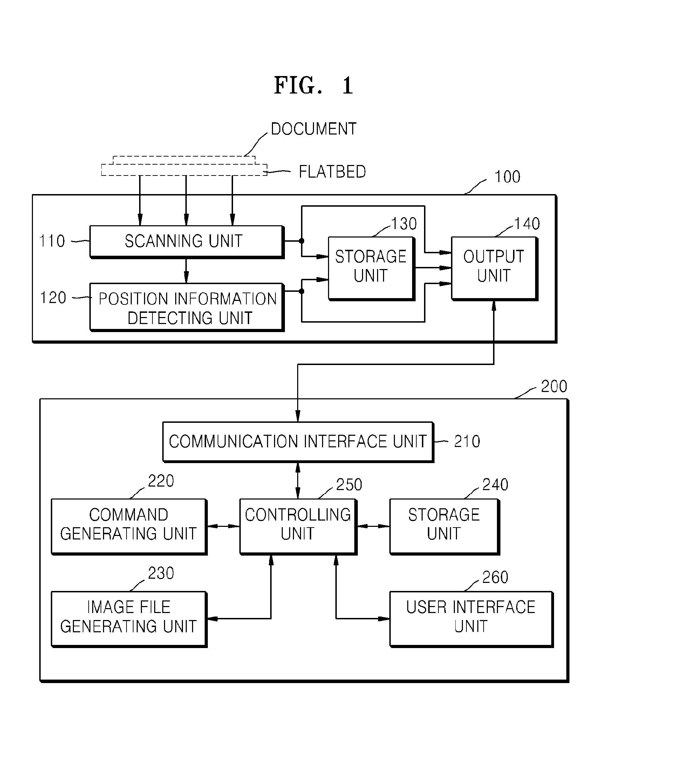

FIG. 1 is a block diagram of an image scanning system according to an embodiment of the present general inventive concept. The image scanning system includes an image scanning apparatus 100 and a host apparatus 200. The image scanning apparatus 100 includes a scanning unit 110, a position information detecting unit 120, a storage unit 130, and an output unit 140. The host apparatus 200 includes a communication interface unit 210, a command generating unit 220, an image file generating unit 230, a storage unit 240, a controlling unit 250, and a user interface unit 260.

The image scanning system of FIG. 1 includes components related to the present embodiment. Also, it may be easily understood by those of ordinary skill in the art that general-purpose components other than the components shown in FIG. 1 may be further included in the image scanning system.

The image scanning apparatus 100 scans a flatbed included in the image scanning apparatus 100 for a scan target. The scanning involves converting a document, including a photo or a picture, into image data. The image data scanned by the image scanning apparatus 100 is converted into an image file by the host apparatus 200. A user may view the image file through the user interface unit 260 of the host apparatus 200.

In general, when the image scanning apparatus 100 scans the entire flatbed for the scan target, a document image of the image file displayed on the host apparatus 200 may be biased or tilted according to a document position on the flatbed. Thus, according to the present embodiment, the image scanning apparatus 100 and the host apparatus 200 may correct the document position and may generate the image file, in which the document position is corrected, by only using software and not any separate hardware.

The image scanning apparatus 100 obtains the image data of the document on the flatbed, detects position information based on a reference point of the flatbed from the image data, and outputs the image data and the position information. Referring to FIG. 1, the image scanning apparatus 100 includes the scanning unit 110, the position information detecting unit 120, the storage unit 130, and the output unit 140.

The scanning unit 110 obtains the image data of the document on the flatbed. The scanning unit 110 may include a light source (not shown) for irradiating light onto the document on the flatbed, and an image sensor (not shown) for transforming reflected light into an electric signal.

The position information detecting unit 120 detects the position information based on the reference point of the flatbed from the image data obtained by the scanning unit 110. In this case, the reference point of the flatbed is any one point that is used as a standard point of the flatbed on which the document is positioned. Hereinafter, for convenience of description, a bottom left corner of the flatbed is the reference point, but it may be easily understood by those of ordinary skill in the art that the present embodiment is not limited thereto.

For example, the position information detecting unit 120 detects at least one of a coordinate and rotational angle (i.e., the coordinate, or the rotational angle or both) of at least one vertex from among vertexes of the document based on the reference point of the flatbed, from the image data obtained by the scanning unit 110. In more detail, the position information detecting unit 120 detects edge information of the document, and detects the vertexes of the document from the edge information. Thus, the position information detecting unit 120 may detect the position information of the document based on the reference point of the flatbed.

It is assumed that the document has a rectangular shape. The document may have four vertexes including first through fourth vertexes. The position information detecting unit 120 detects a coordinate of the first vertex and a rotational angle of the first vertex. In this case, the position information detecting unit 120 may further detect coordinates of the second through fourth vertexes based on the reference point of the flatbed.

For example, the coordinate of the first vertex is calculated when the reference point of the flatbed is set as a coordinate (0, 0), and the rotational angle of the first vertex is a clockwise or counterclockwise rotational degree based on the reference point of the flatbed, but the present embodiment is not limited thereto.

The storage unit 130 stores the image data and the position information. In this case, the image data stored in the storage unit 130 is raw data obtained from the scanning unit 110.

Since an amount of data stored in the storage unit 130 is not large, the image scanning apparatus 100 may operate reliably without any separate hardware such as a memory or the like. In addition, since the raw data is stored in the storage unit 130, original data of the document may be protected.

The storage unit 130 is a general storage medium. It may be easily understood by those of ordinary skill in the art that the storage unit 130 may include a hard disk drive (HDD), a random access memory (RAM), a flash memory, a memory card, or the like.

However, it may be easily understood by those of ordinary skill in the art that the image scanning apparatus 100 may output the image data obtained from the scanning unit 110 and the position information detected from the position information detecting unit 120 through the output unit 140, instead of storing the image data and the position information, or alternatively, the image scanning apparatus 100 may temporarily store the image data and the position information, and then may output the image data and the position information through the output unit 140.

The output unit 140 may output the image data obtained from the scanning unit 110 and the position information detected from the position information detecting unit 120 to the host apparatus 200, or alternatively, may output the image data and position information stored in the storage unit 130 according to an environment. In addition, the output unit 140 may output data to an external device other than the host apparatus 200. In this case, the external device may include a general-purpose computer system, a universal serial bus (USB) memory, an image forming apparatus, or the like.

The output unit 140 may transmit data to an external device over a wired/wireless network. In addition, the network corresponds to the Internet, a local area network (LAN), a wireless LAN, a wide area network (WAN), or the like. However, it may be easily understood by those of ordinary skill in the art that the network may be any kind of network that is capable of transmitting and receiving information.

The image scanning apparatus 100 may store the image data obtained from the scanning unit 110 as raw data, or alternatively, may output the image data to an external device as raw data. Thus, according to the present embodiment, the document position of the image data may be corrected by the host apparatus 200 instead of the image scanning apparatus 100.

Accordingly, the image file, in which the document position of the image data is corrected, may be generated even when a large-capacity memory or any separate hardware is not further installed in the image scanning apparatus 100. In addition, quality of the image file of the document may be improved while reducing manufacturing costs of the image scanning apparatus 100.

The host apparatus 200 receives the image data and the position information from the image scanning apparatus 100, generates a command for correcting the document position of the image data based on the reference point of the flatbed by using the position information, and executes the command so as to generate the image file, in which the document position of the image data is corrected, based on the reference point of the flatbed. For example, the host apparatus 200 may include a receiving apparatus. Referring to FIG. 1, the host apparatus 200 includes the communication interface unit 210, the command generating unit 220, the image file generating unit 230, the storage unit 240, the controlling unit 250, and the user interface unit 260.

The communication interface unit 210 receives the image data and the position information from the image scanning apparatus 100. The communication interface unit 210 transmits and receives data to/from an external device over a wired/wireless network. The network corresponds to the Internet, a LAN, a wireless LAN, a WAN, or the like. However, it may be easily understood by those of ordinary skill in the art that the network may be any kind of network that is capable of transmitting and receiving information.

The command generating unit 220 generates the command for correcting the position of the image data received from the image scanning apparatus 100 based on the reference point of the flatbed of the image scanning apparatus 100 by using the position information received from the image scanning apparatus 100. In addition, when the image data and the position information received from the image scanning apparatus 100 are stored in the storage unit 240, the command generating unit 220 may generate the command for correcting the position of the image data stored in the storage unit 240 based on the reference point of the flatbed of the image scanning apparatus 100 by using the position information stored in the storage unit 240.

For example, the command generating unit 220 generates a command for performing at least one of translation and rotation based on the reference point of the flatbed of the image scanning apparatus 100 on the image data received from the image scanning apparatus 100 by using at least one of the coordinate and rotational angle of at least one of the vertexes of the document which are contained in the position information received from the image scanning apparatus 100. In addition, the command according to the present embodiment may indicate a degree by which the image data received from the image scanning apparatus 100 needs to be moved, and may be expressed in a matrix form.

However, the translation and the rotation are just examples of the command according to the present embodiment, and thus the command is not limited thereto. It may be easily understood by those of ordinary skill in the art that the command generating unit 220 may generate a command for performing enlargement/reduction, skew, or the like.

The command generating unit 220 may generate the command according to a file format of the image file generated by the host apparatus 200.

For example, the file format of the image file generated by the host apparatus 200 may be any of various formats such as portable document format (PDF), tagged image file format (TIF), bitmap, joint photographic experts group (JPEG), graphic interchange format (GIF), portable network graphics (PNG), or the like according to an image storage format. In addition, according to the present embodiment, the command generating unit 220 may generate the command according to an image storage format.

Hereinafter, for convenience of description, it is assumed that the image storage format of the image file generated by the host apparatus 200 is PDF.

When the document has the first through fourth vertexes, the command generating unit 220 receives the position information regarding at least one vertex from among the first through fourth vertexes. In more detail, the command generating unit 220 receives the position information regarding the coordinate of the first vertex of the document and the rotational angle of the first vertex based on the reference point of the flatbed of the image scanning apparatus 100. In this case, the first vertex may be a point that is closest to the reference point of the flatbed, but the present embodiment is not limited thereto. In addition, the command generating unit 220 may further receive the position information regarding the coordinates of the second through fourth vertexes.

The command generating unit 220 generates the command for correcting the position of the image data received from the image scanning apparatus 100 based on the reference point of the flatbed. Thus, the command generating unit 220 may generate the command for performing at least one of translation and rotation based on the reference point of the flatbed of the image scanning apparatus 100 on the image data received from the image scanning apparatus 100.

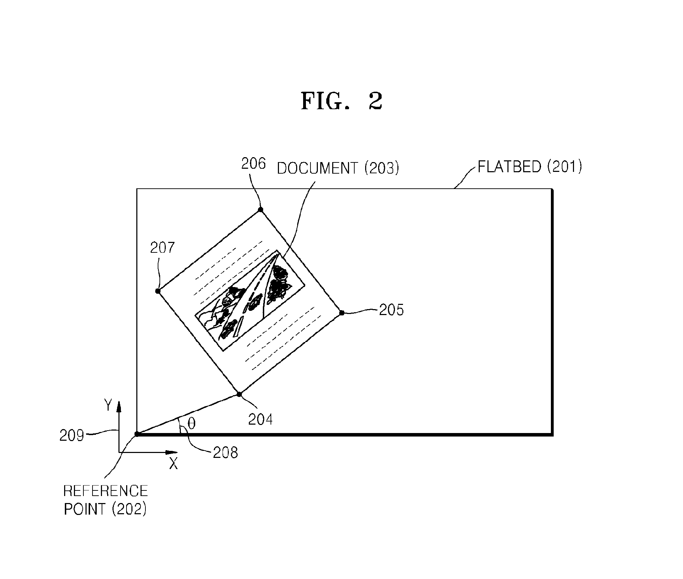

A method of generating the command in the command generating unit 220 will be described in more detail, with reference to FIG. 2. FIG. 2 is a diagram of an image formed by scanning a document 203 on a flatbed 201 of the image scanning apparatus 100, according to an embodiment of the present inventive concept. Referring to FIG. 2, the document 203 has a first vertex 204, a second vertex 205, a third vertex 206, and a fourth vertex 207.

For example, it is assumed that a coordinate of a reference point 202 of the flatbed 201 is (0, 0), a coordinate of the first vertex 204 received by the command generating unit 220 is (x1, y1), and a rotational angle 208 is "θ".

A command for translating the position of the image data received from the image scanning apparatus 100 based on the reference point 202 of the flatbed 201 may be defined in a matrix form as shown in Formula 1 below.

$$\begin{bmatrix} 1 & 0 & 0 & 1 & dx & dy \end{bmatrix} \qquad \ldots (1)$$

In Formula 1, a value "dx" refers to a distance by which an origin of a coordinate system 209 of the image data received from the image scanning apparatus 100 based on the reference point 202 of the flatbed 201 needs to be moved in an x-axis direction, and a value "dy" refers to a distance by which the origin of the coordinate system 209 of the image data received from the image scanning apparatus 100 based on the reference point 202 of the flatbed 201 needs to be moved in a y-axis direction.

According to the present embodiment, the value "dx" is a distance from the reference point 202 to the first vertex 204 in the x-axis direction, and the value "dy" is a distance from the reference point 202 to the first vertex 204 in the y-axis direction. The values "dx" and "dy" may be defined by Equations 2 and 3 below, respectively.

$$dx = x1 \qquad \ldots (2)$$

$$dy = y1 \qquad \ldots (3)$$

Thus, the command generated by the command generating unit 220 may correct the position of the image data received from the image scanning apparatus 100 based on the reference point 202 of the flatbed 201.

In addition, a command for rotating the image data received from the image scanning apparatus 100 based on the reference point 202 of the flatbed 201 may be defined in a matrix form as shown in Formula 4 below.

$$\begin{bmatrix} \cos\theta & \sin\theta & -\sin\theta & \cos\theta & 0 & 0 \end{bmatrix} \quad ...(4)$$

In Formula 4, a value "θ" refers to the rotational angle 208 by which the first vertex 204 is rotated counterclockwise from the reference point 202.

In addition, the value "θ'" is a degree by which the origin of the coordinate system 209 of the image data received from the image scanning apparatus 100 based on the reference point 202 of the flatbed 201 needs to be rotated counterclockwise.

Thus, the command generated by the command generating unit 220 may correct the position of the image data received from the image scanning apparatus 100 based on the reference point 202 of the flatbed 201.

The command for performing at least one of translation and rotation based on the reference point 202 of the flatbed 201 on the image data received from the image scanning apparatus 100 may be defined in a matrix form as shown in Formula 5 below.

$$\begin{bmatrix} \cos\theta & \sin\theta & -\sin\theta & \cos\theta & dx & dy \end{bmatrix} \quad ...(5)$$

Formula 5 may be understood by those of ordinary skill in the art, with reference to Equations 1 through 5, and thus a detailed description thereof will not be given herein.

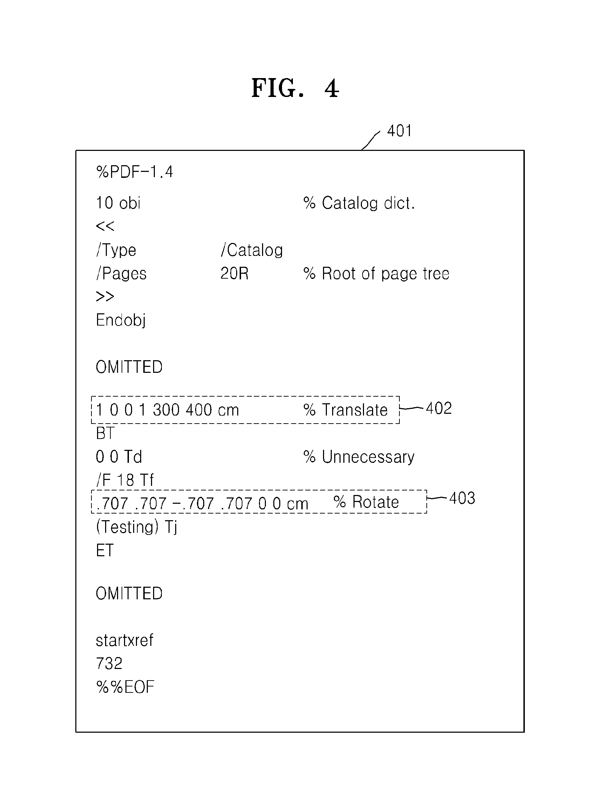

Referring back to FIG. 1, the command generating unit 220 generates the command for correcting the position of the image data received from the image scanning apparatus 100 based on the reference point of the flatbed of the image scanning apparatus 100. In this case, the generated command may be combined with the image data to form file data, and then the file data may be output to the image file generating unit 230. The file data will be described in detail, with reference to FIG. 4.

The image file generating unit 230 executes the command generated by the command generating unit 220 so as to generate the image file, in which the position of the image data is corrected, based on the reference point of the flatbed of the image scanning apparatus 100.

For example, the image file generating unit 230 parses the file data formed by combining the image data with the command, and extracts and executes the command generated by the command generating unit 220. The image file generating unit 230 renders the image data received from the image scanning apparatus 100 based on information that is contained in the command expressed in a matrix form (hereinafter, referred to as matrix information). Thus, the position of the image data received from the image scanning apparatus 100 may be corrected according to the matrix information contained in the command generated by the command generating unit 220.

A method of correcting the position of the image data received from the image scanning apparatus 100 in the image file generating unit 230 will be described in more detail, with reference to FIG. 2.

When the command generating unit 220 generates a command containing matrix information as shown in Formula 1, the image file generating unit 230 may perform an operation corresponding to Equation 6 below, in order to perform translation on the image data received from the image scanning apparatus 100.

$$\begin{bmatrix} x' & y' & 1 \end{bmatrix} = \begin{bmatrix} x & y & 1 \end{bmatrix} \cdot \begin{bmatrix} 1 & 0 & 0 \\ 0 & 1 & 0 \\ dx & dy & 1 \end{bmatrix} \quad ...(6)$$

In Equation 6, x' and y' refer to a coordinate of a coordinate system of the image data received from the image scanning apparatus 100, and x and y refer to a coordinate of a coordinate system of the image data, in which the position is corrected, by executing the command generated by the command generating unit 220.

Thus, the image file generating unit 230 may perform the operation corresponding to Equation 6 on each piece of the image data received from the image scanning apparatus 100 so as to translate the image data received from the image scanning apparatus 100 based on the reference point of the flatbed.

In addition, when the command generating unit 220 generates a command containing matrix information as shown in Formula 4, the image file generating unit 230 may perform an operation corresponding to Equation 7 below, in order to perform rotation on the image data received from the image scanning apparatus 100.

$$[x` \quad y` \quad 1] = [x \quad y \quad 1] \cdot \begin{bmatrix} \cos\theta & \sin\theta & 0 \\ -\sin\theta & \cos\theta & 0 \\ 0 & 0 & 1 \end{bmatrix} \quad ...(7)$$

When the command generating unit 220 generates a command containing matrix information as shown in Formula 5, the image file generating unit 230 may perform an operation corresponding to Equation 8 below, in order to perform translation and rotation on the image data received from the image scanning apparatus 100.

$$[x` \quad y` \quad 1] = [x \quad y \quad 1] \cdot \begin{bmatrix} \cos\theta & \sin\theta & 0 \\ -\sin\theta & \cos\theta & 0 \\ dx & dy & 1 \end{bmatrix} \quad ...(8)$$

Equations 7 and 8 may be understood by those of ordinary skill in the art, with reference to Equation 6, and thus the detailed description thereof will not be given herein.

According to the present embodiment, FIG. 2 and Equations 1 through 8 have been described under a condition where the file format of the image file is PDF. With regard to a PDF image file, a command and the image file may be generated by using a matrix command and a current transformation matrix (CTM), based on a relative coordination system.

Thus, correction of the received image data may include translation, rotation, or both.

In more detail, the relative coordination system has an origin that is indicated by a coordinate (x, y) instead of (0, 0). Thus, each bit contained in the image data may be expressed by a coordinate based on the relative coordination system, and the expressed coordinate may be easily recognized.

However, each bit of the image data expressed in a coordinate based on the relative coordination system is translated based on an absolute coordinate system, and then is rendered. In this case, the absolute coordinate system may be a device coordinate system based on a rendering device. In order to perform such coordinate translation, the CTM may be used, and a matrix command describing the CTM may be used.

Thus, the command generating unit 220 generates the command for correcting the position of the image data received from the image scanning apparatus 100 by using the image data expressed based on the relative coordinate system. The image file generating unit 230 may execute the command so as to generate the image file, in which the position is corrected.

When the file format of the image file generated by the image file generating unit 230 is PDF, it may be understood by those of ordinary skill in the art that the image file generating unit 230 uses PDF emulation.

The command generating unit 220 and the image file generating unit 230 are not limited to performing operations according to a PDF image file and may perform operations according to various file formats of image files.

In other words, the command generating unit 220 may generate the command according to a file format that is selected by a user, or is set as a default setting, and then the image file generating unit 230 may execute the command so as to generate the image file based on the file format.

Accordingly, the image in the image file generated by the image file generating unit 230 is not biased or tilted regardless of the position of the document on the flatbed of the image scanning apparatus 100.

Referring back to FIG. 1, the storage unit 240 stores the image data and the position information received from the image scanning apparatus 100. The storage unit 240 may store the image file generated by the image file generating unit 230.

Thus, since the image data received from the image scanning apparatus 100 is raw data, original data may be stored without being damaged. In addition, if necessary, the command generating unit 220 may generate the command for correcting the position of the image data, and the image file generating unit 230 may execute the command generated by the command generating unit 220 so as to correct the position of the image data.

The controlling unit 250 controls an overall function of the host apparatus 200. The user interface unit 260 obtains an input signal from a user, and displays output information to the user. For example, the user interface unit 260 may include a display panel, a mouse, a keyboard, a touch screen, a monitor, a speaker, or the like, included in the host apparatus 200.

It may be understood by those of ordinary skill in the art that the user may manipulate the user interface unit 260 so as to determine whether the position of the image data received from the image scanning apparatus 100 is to be corrected, and the position may be corrected according to the determination result.

Thus, the image scanning apparatus 100 may improve the quality of the image file of the document to be scanned by only using software and not any expensive hardware component.

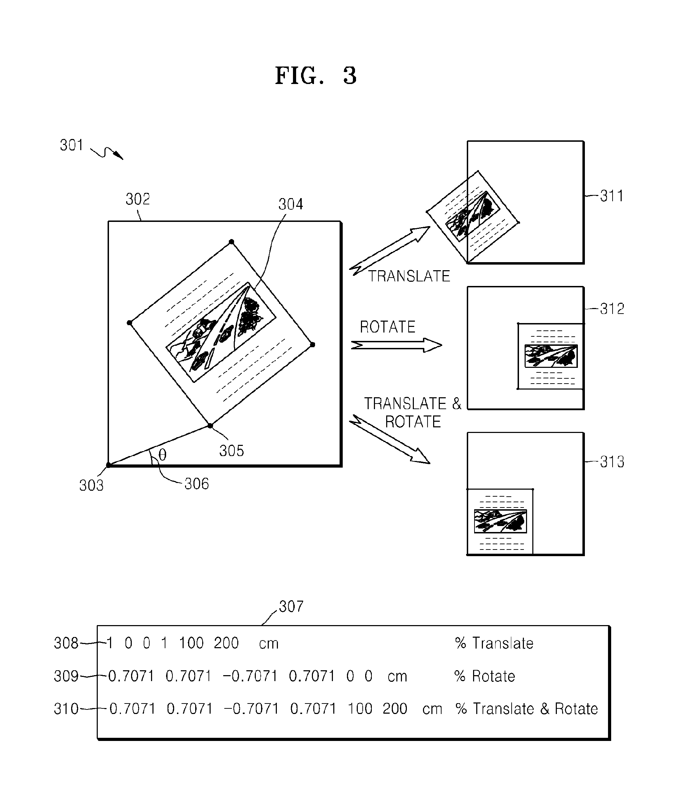

FIG. 3 is a diagram of image data 301 of a document 304 as a scan target, and a command 307 generated by the command generating unit 220, according to an embodiment of the present inventive concept. FIG. 3 shows an example of the image data 301 of the document 304 scanned by the image scanning apparatus 100, and an example of the command 307 generated by the command generating unit 220 in order to correct a position of the image data 301.

The image data 301 indicates an image of the document 304 on a flatbed 302. In this case, the position information detecting unit 120 may detect a coordinate of a first vertex 305 and a rotational angle 306 of the first vertex, based on a reference point 303 of the flatbed 302.

The command generating unit 220 may generate at least one of a translation command 308 for performing translation, a rotation command 309 for performing rotation, and a translation and rotation command 310 for performing translation and rotation.

Since the first vertex 305 of the document 304 of the image data 301 is positioned on a coordinate (100, 200) based on the reference point 303, the translation command 308 performs translation on the image data 301 according to the coordinate (100, 200). In this case, integer coordinates are separated by units of 1/72 inch, but the present embodiment is not limited thereto.

The image file generating unit 230 may execute the translation command 308 so as to correct the position of the image data 301 based on the reference point 303. For example, a first image file 311 indicates an image file in which the position is corrected by executing the translation command 308.

Since the first vertex 305 of the document 304 of the image data 301 rotates by 45° based on the reference point 303, the rotation command 309 performs rotation on the image data 301 by 45°.

The image file generating unit 230 may execute the rotation command 309 so as to correct the position of the image data 301 based on the reference point 303. For example, a second image file 312 indicates an image file in which the position is corrected by executing the rotation command 309.

Since the first vertex 305 of the document 304 of the image data 301 is positioned on a coordinate (100, 200), and rotates by 45° based on the reference point 303, the translation and rotation command 310 performs translation and rotation on the image data 301 according to the coordinate (100, 200) and 45°, respectively.

The image file generating unit 230 may execute the translation and rotation command 310 so as to correct the position of the image data 301 based on the reference point 303. For example, a third image file 313 indicates an image file in which the position is corrected by executing the translation and rotation command 310.

Thus, the image scanning apparatus 100 and the host apparatus 200 may generate an image file in which the position is corrected by only using software and not any separate hardware.

FIG. 4 is a diagram of file data 401 that is formed by combining a command generated by the command generating unit 220 with image data, according to an embodiment of the present inventive concept. FIG. 4 shows an example of the file data 401 formed by combining a translation command 402 and a rotation command 403 that are generated by the command generating unit 220 with the image data.

The image file generating unit 230 may parse the file data 401 so as to extract the translation command 402 and the rotation command 403. In this case, the image file generating unit 230 may extract the translation command 402 and the rotation command 403 by using a command name that is previously defined, such as "cm".

The meaning of the file data 401 of FIG. 4 may be understood by those of ordinary skill in the art, and a detailed description thereof will not be given herein.

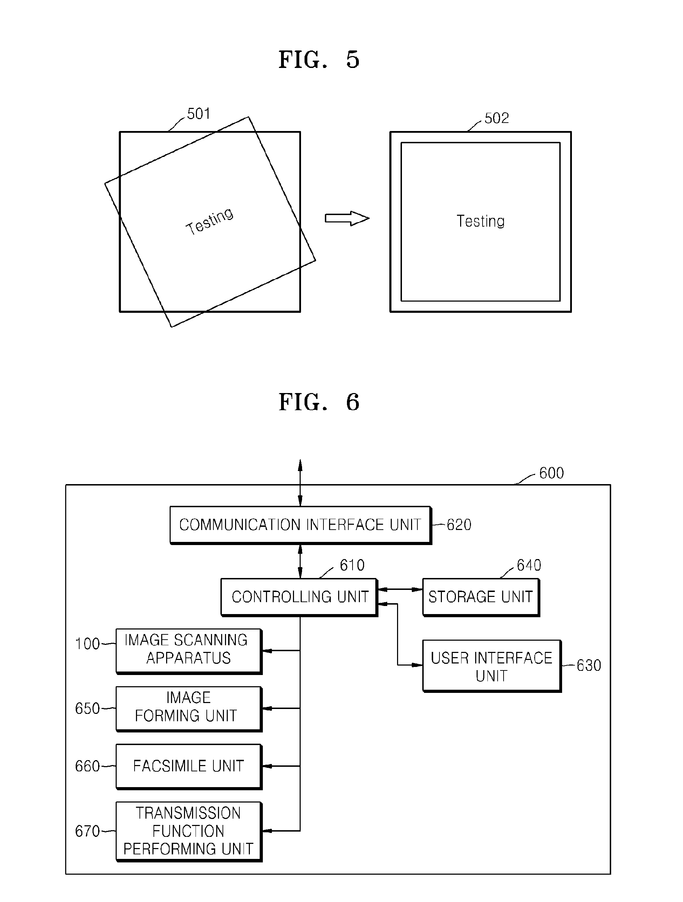

FIG. 5 is a diagram of an image file 502 that is generated according to an execution result of the file data 401 of FIG. 4, according to an embodiment of the present inventive concept. FIG. 5 shows the image file 502 generated after a document position of image data 501 of a document as a scan target is corrected by the image file generating unit 230.

Thus, the image scanning apparatus 100 may prevent a document image of an image file generated by the image scanning apparatus 100 and the host apparatus 200 from being biased or tilted when a document as a scan target is biased or tilted on the flatbed of the image scanning apparatus 100.

FIG. 6 is a diagram of an image forming apparatus 600 according to an embodiment of the present general inventive concept. Referring to FIG. 6, the image forming apparatus 600 includes a controlling unit 610, a communication interface unit 620, a user interface unit 630, a storage unit 640, an image forming unit 650, a facsimile unit 660, a transmission function performing unit 670, and the image scanning apparatus 100.

The image forming apparatus 600 of FIG. 6 includes components related to the present embodiment. Also, it may be easily understood by those of ordinary skill in the art that general-purpose components other than the components shown in FIG. 6 may be further included in the image forming apparatus 600.

The image scanning apparatus 100 obtains image data of a document on a flatbed, and detects position information based on a reference point of the flatbed from the obtained image data. The image scanning apparatus 100 of FIG. 6 is the same as the image scanning apparatus 100 described with reference to FIGS. 1 through 5, and thus description will not be repeated.

The controlling unit 610 controls an overall function of the image forming apparatus 600. In addition, the controlling unit 610 generates a command for correcting a position of the obtained image data based on the reference point of the flatbed by using the detected position information, and executes the command so as to generate print data, in which the position of the obtained image data is corrected based on the reference point of the flatbed. In addition, the controlling unit 610 may execute the generated command so as to generate facsimile data and transmission data, in which the position of the obtained image is corrected based on the reference point.

For example, the controlling unit 610 may perform the same operations as operations related to the command generating unit 220 and the image file generating unit 230, and thus descriptions will not be repeated.

However, the image forming apparatus 600 may transmit the image data and the position information to an external device via the communication interface unit 620, and may receive an image file in which the position of the image data is corrected from the external device. In this case, the controlling unit 610 may not generate a command and an image file.

The communication interface unit 620 transmits and receives data to/from an external device over a network. The communication interface unit 620 may include a module used in facsimile transmission/reception, a network module for connection to a network, and a universal serial bus (USB) host module for forming a data transfer channel with a movable storing medium, depending on functions of the image forming apparatus 600. The external device is connected with the image forming apparatus 600 over a wired or wireless network, and may be a facsimile, a computer system, a mobile phone, a personal digital assistant (PDA), or a server.

The user interface unit 630 obtains an input signal from a user and displays information to the user. For example, the user interface unit 630 may include input/output devices provided in the image forming apparatus 600, such as a display panel, a mouse, a keyboard, a touch screen, a monitor, and a speaker.

The storing unit 640 stores data, print data, and scan data generated during operation of the image forming apparatus 600. In addition, the storing unit 640 may receive the image data and the position information from the image scanning apparatus 100, and may further store the received image data and position information.

The image forming unit 650 performs a print operation of printing the print data generated by the controlling unit 610 onto a print sheet. The facsimile unit 660 facsimile-transmits the facsimile data generated by the controlling unit 610 to an external facsimile device. The transmission function performing unit 670 transmits the transmission data generated by the controlling unit 610 to the external device, which may be a server, a movable recording medium, or a computer system.

Thus, the image forming apparatus 600 may correct the position of the image data scanned by the image scanning apparatus 100, may print an image file in which position of the image data is corrected, and may facsimile-transmit and transmit the image file in which position of the image data is corrected to the external device.

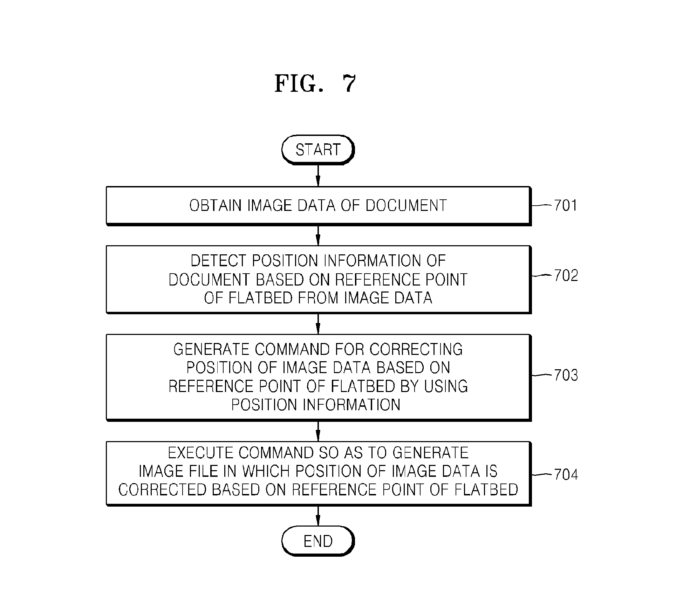

FIG. 7 is a flowchart of an image scanning method according to an embodiment of the general inventive concept. Referring to FIG. 7, the image scanning method includes operations time-serially performed by the image scanning system of FIG. 1. Although omitted in the description below, the description of the image scanning system of FIG. 1 may be applied to an image scanning method.

In operation 701, the scanning unit 110 of the image scanning apparatus 100 obtains image data of a document on the flatbed of the image scanning apparatus 100. In this case, the obtained image data may be stored in the storage unit 130, and then may be output to the host apparatus 200 via the output unit 140. Alternatively, the obtained image data may be output directly to the host apparatus 200 via the output unit 140 without being stored in the storage unit 130.

In operation 702, the position information detecting unit 120 of the image scanning apparatus 100 detects position information of the document based on a reference point of the flatbed from the obtained image data. In this case, the detected position information may be stored in the storage unit 130, and then may be output to the host apparatus 200 via the output unit 140. Alternatively, the detected position information may be output directly to the host apparatus 200 via the output unit 140 without being stored in the storage unit 130.

In operation 703, the command generating unit 220 of the host apparatus 200 generates a command for correcting a position of the obtained image data based on the reference point of the flatbed by using the detected position information.

In operation 704, the image file generating unit 230 of the host apparatus 200 executes the command so as to generate an image file in which the position of the obtained image data is corrected based on the reference point of the flatbed.

Thus, the user may view the image file, in which the position of the image data is corrected, through the host apparatus 200.

Thus, since the image scanning apparatus 100 does not correct the position of the image data, the image scanning apparatus 100 does not use a system on chip (SoC) for such correcting operation in the image scanning apparatus 100, or a separate memory for driving the SoC.

In addition, the image data is raw data that is scanned by the image scanning apparatus 100 and stored in the image scanning apparatus 100 or the host apparatus 200, and thus original data that is not processed may be protected.

The present general inventive concept may be embodied as a program that may be executed on computers, and may be implemented on general-purpose digital computers executing the program using a recording medium. In addition, a data structure used in an embodiment of the present general inventive concept may be recorded on a computer-readable recording medium by various means. Examples of the recording media include magnetic storage media such as read-only memory (ROM), floppy disks, and hard disks, and optical data storage devices such as CD-ROMs and digital versatile discs (DVD).

While the present general inventive concept has been particularly shown and described with reference to exemplary embodiments thereof, it will be understood by those of ordinary skill in the art that various changes in form and details may be made therein without departing from the spirit and scope of the present general inventive concept as defined by the following claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. An image scanning system comprising:

    an image scanning apparatus for obtaining image data of a document on a flatbed, detecting position information of the document based on a reference point of the flatbed from the obtained image data, and outputting the obtained image data and the detected position information; and
    a receiving apparatus for receiving the image data and the position information, generating a command for correcting a position of the received image data based on the reference point of the flatbed by using the position information, and executing the generated command so as to generate an image file in which the position of the obtained image data is corrected based on the reference point of the flatbed.

2. The image scanning system of claim 1, wherein the image scanning apparatus comprises a position information detecting unit for detecting at least one of a coordinate or rotational angle of at least one vertex from among vertexes of the document based on the reference point of the flatbed.

3. The image scanning system of claim 1, wherein the image scanning apparatus comprises a storage unit for storing the obtained image data and the detected position information.

4. The image scanning system of claim 1, wherein the receiving apparatus comprises a command generating unit for generating a command for performing at least one of translation or rotation on the received image data based on the reference point of the flatbed by using at least one of a coordinate or rotational angle of at least one vertex from among vertexes of the document contained in the position information.

5. The image scanning system of claim 1, wherein the command generated by the receiving apparatus indicates a degree by which the received image data needs to be moved, and is expressed in a matrix form.

6. The image scanning system of claim 1, wherein the receiving apparatus comprises:

    a storage unit for storing the received image data and the received position information; and
    a command generating unit for generating a command for performing at least one of translation or rotation on the stored image data based on the reference point of the flatbed by using at least one of a coordinate or rotational angle of at least one vertex from among vertexes of the document contained in the position information.

7. An image forming apparatus including the image scanning apparatus of claims 1 though 6 comprising:

    the image scanning apparatus for obtaining image data of a document on a flatbed, and detecting position information of the document based on a reference point of the flatbed from the obtained image data;
    a controlling unit for generating a command for correcting a position of the obtained image data based on the reference point of the flatbed by using the detected position information, and executing the command so as to generate print data in which the position of the obtained image data is corrected based on the reference point of the flatbed; and
    an imaging forming unit for printing the generated print data onto a print sheet.

8. The image forming apparatus of claim 7, further comprising a storage unit for storing the obtained image data and the detected position information.

9. The image forming apparatus of claim 7, wherein the controlling unit executes the generated command so as to generate facsimile data in which the position of the obtained image data is corrected based on the reference point of the flatbed, and wherein the image forming apparatus further comprises a facsimile unit for transmitting the generated facsimile data to an external facsimile device.

10. The image forming apparatus of claim 7, wherein the controlling unit detects at least one of a coordinate or rotational angle of at least one vertex from among vertexes of the document based on the reference point of the flatbed, and generates a command for performing at least one of translation or rotation on the obtained image data based on the reference point of the flatbed by using at least one of the detected coordinate or the detected rotational angle.

11. The image forming apparatus of claim 7, wherein the generated command indicates a degree by which the obtained image data needs to be moved, and is expressed in a matrix form.

12. An image scanning method comprising:

    obtaining image data of a document on a flatbed;
    detecting position information of the document based on a reference point of the flatbed from the obtained image data;
    generating a command for correcting a position of the obtained image data based on the reference point of the flatbed by using the detected position information; and
    executing the generated command so as to generate an image file in which the position of the obtained image data is corrected based on the reference point of the flatbed.

13. The image scanning method of claim 12, wherein the detecting of the position information comprises: detecting at least one of a coordinate or rotational angle of at least one vertex from among vertexes of the document based on the reference point of the flatbed, and wherein the generating of the command comprises: generating a command for performing at least one of translation or rotation on the obtained image data based on the reference point of the flatbed by using the at least one of the detected coordinate or the detected rotational angle.

14. The image scanning method of claim 12, wherein the generated command indicates a degree by which the obtained image data needs to be moved, and is expressed in a matrix form.

15. A non-transitory computer readable recording medium having recorded thereon a program for executing the image scanning method of claims 12 through 14.

# FIG. 1

DOCUMENT

FLATBED

100

110 — SCANNING UNIT

120 — POSITION INFORMATION DETECTING UNIT

130
STORAGE UNIT

140
OUTPUT UNIT

200

COMMUNICATION INTERFACE UNIT — 210

220
COMMAND GENERATING UNIT

250
CONTROLLING UNIT

240
STORAGE UNIT

230
IMAGE FILE GENERATING UNIT

260
USER INTERFACE UNIT

# FIG. 2

# FIG. 3

```
301

   302                      304                                    ┌──────────┐
                                                                  │          │─311
   ┌──────────────────────────────┐                              │   ◇      │
   │                              │                               │          │
   │                              │          ═══════════╗         └──────────┘
   │                              │          TRANSLATE
   │                              │                               ┌──────────┐
   │                              │          ═══════════╗         │          │─312
   │                              │          ROTATE               │  ▢       │
   │                              │                               │          │
   │          θ                   │          TRANSLATE &          └──────────┘
   │                              │          ROTATE
   └──────────────────────────────┘                              ┌──────────┐
   303        306          305                ═══════════╗        │ ▢        │─313
                                                                  │          │
                                                                  └──────────┘
```

```
                                307
   ┌───────────────────────────────────────────────────────────────────────┐
308─┤ 1  0  0  1  100  200      cm                         % Translate        │
   │                                                                         │
309─┤ 0.7071  0.7071  −0.7071  0.7071  0  0   cm           % Rotate           │
   │                                                                         │
310─┤ 0.7071  0.7071  −0.7071  0.7071  100  200   cm   % Translate & Rotate   │
   └───────────────────────────────────────────────────────────────────────┘
```

# FIG. 4

401

```
%PDF-1.4

10 obi                          % Catalog dict.
<<
/Type          /Catalog
/Pages         20R             % Root of page tree
>>
Endobj

OMITTED

1 0 0 1 300 400 cm       % Translate        ——402
BT
0 0 Td                   % Unnecessary
/F 18 Tf
.707 .707 -.707 .707 0 0 cm    % Rotate      ——403
(Testing) Tj
ET

OMITTED

startxref
732
%%EOF
```

FIG. 5

501

Testing

502

Testing

FIG. 6

600

COMMUNICATION INTERFACE UNIT —620

610

CONTROLLING UNIT

640

STORAGE UNIT

100— IMAGE SCANNING APPARATUS

650— IMAGE FORMING UNIT

660— FACSIMILE UNIT

670— TRANSMISSION FUNCTION PERFORMING UNIT

USER INTERFACE UNIT —630

# FIG. 7

START

OBTAIN IMAGE DATA OF DOCUMENT —701

DETECT POSITION INFORMATION OF
DOCUMENT BASED ON REFERENCE POINT
OF FLATBED FROM IMAGE DATA —702

GENERATE COMMAND FOR CORRECTING
POSITION OF IMAGE DATA BASED ON
REFERENCE POINT OF FLATBED BY USING
POSITION INFORMATION —703

EXECUTE COMMAND SO AS TO GENERATE
IMAGE FILE IN WHICH POSITION OF IMAGE DATA IS
CORRECTED BASED ON REFERENCE POINT OF FLATBED —704

END

# EP 2 434 741 A1

Europäisches
Patentamt
European
Patent Office
Office européen
des brevets

## EUROPEAN SEARCH REPORT

Application Number

EP 11 17 2976

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/131060 A1 (MAIER MICHAEL [CH] ET AL) 19 September 2002 (2002-09-19)<br>* abstract *<br>* figures 4,5 *<br>* paragraph [0034] - paragraph [0037] *<br>----- | 1-15 | INV.<br>H04N1/00<br>H04N1/387 |
| A | US 2003/214673 A1 (KIMOTO OSAMU [JP]) 20 November 2003 (2003-11-20)<br>* abstract *<br>----- | 1-15 | |
| A | US 5 913 099 A (KAMEI MASAFUMI [JP] ET AL) 15 June 1999 (1999-06-15)<br>* abstract *<br>----- | 1-15 | |
| | | | TECHNICAL FIELDS SEARCHED (IPC)<br><br>H04N |

The present search report has been drawn up for all claims

| Place of search | Date of completion of the search | Examiner |
|---|---|---|
| The Hague | 20 February 2012 | Stoffers, Christian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 11 17 2976

This annex lists the patent family members relating to the patent documents cited in  the above-mentioned European search report.
The members are as contained in the European Patent Office EDP file on
The European Patent Office is in no way liable for these particulars which are merely given for the purpose of information.

20-02-2012

| Patent document cited in search report | | Publication date | Patent family member(s) | | Publication date |
|---|---|---|---|---|---|
| US 2002131060 | A1 | 19-09-2002 | CA | 2374092 A1 | 06-09-2002 |
| | | | EP | 1239659 A1 | 11-09-2002 |
| | | | US | 2002131060 A1 | 19-09-2002 |
| US 2003214673 | A1 | 20-11-2003 | JP | 3827152 B2 | 27-09-2006 |
| | | | JP | 2003338918 A | 28-11-2003 |
| | | | US | 2003214673 A1 | 20-11-2003 |
| US 5913099 | A | 15-06-1999 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020100082088